# EUROPÄISCHE PATENTANMELDUNG

(11) **EP 2 924 400 A1**
(43) Veröffentlichungstag der Anmeldung: **30.09.2015**
(21) Anmeldenummer: 15160529.2
(22) Anmeldetag: 24.03.2015
(51) Int. Cl.: G01G 19/03, G08G 1/02

(54) **Einrichtung zur Erfassung, Klassifikation und Verwiegung von Kraftfahrzeugen auf Straßen im fließenden Verkehr**

(30) Priorität: 24.03.2014 DE 202014002729 U
(71) Anmelder: Traffic Data Systems Gmbh, 01217 Dresden (DE)
(72) Erfinder: Weiss, Kurt, 01217 Dresden (DE)
(74) Vertreter: Pfenning, Meinig & Partner GbR

(57) **Zusammenfassung**

Die Erfindung betrifft eine Einrichtung zur Erfassung, Klassifikation und Verwiegung von Kraftfahrzeugen auf Straßen im fließenden Verkehr, bei der Sensoren zur Bestimmung der Masse von Fahrzeugen und Induktivschleifen für mindestens eine Fahrspur vorhanden und in einer Fahrspur Induktivschleifen (1) und Sensoren (2) zur Bestimmung der Masse angeordnet sind. Die Sensoren (2) zur Bestimmung der Masse sind an einen Ladungsverstärker (3) und über diesen an eine Einrichtung (5) zur Erfassung und Verarbeitung, der von den Sensoren (2) zur Bestimmung der Masse gelieferten Signale und sind die Induktivschleifen (1) an eine Einrichtung (4) zur Erfassung und Klassifikation von Fahrzeugen angeschlossen.

## Beschreibung

Die Erfindung betrifft eine Einrichtung zur Erfassung, Klassifikation und Verwiegung von Kraftfahrzeugen auf Straßen im fließenden Verkehr. Es können auch Fahrzeugparameter berechnet werden.

Sie kann in die Fahrbahnen einer Straße eingebaut werden und dabei zur Registrierung, Klassifikation, Bestimmung der Masse von Fahrzeugen/Radlasten und zur Ermittlung anderer Messwerte, wie Geschwindigkeit und Fahrzeuglänge der über die Sensoranordnung hinweg fahrenden Fahrzeuge, genutzt werden.

Dabei ist es bekannt, bei der Erfassung von Kraftfahrzeugen in bzw. unter Straßenbelägen einzelne Sensoren einzulassen oder darunter anzuordnen. Dabei handelt es sich im Wesentlichen um zwei verschiedene Sensorarten. Dies sind zum einen Induktiv- oder Induktionsschleifen und zum anderen werden Sensoren genutzt mit denen die Massen von Fahrzeugen beim Überfahren bestimmt werden. Die letztgenannten Sensoren nutzen bevorzugt den piezoelektrischen Effekt und mittels eines angeschlossenen Ladungsverstärkers können der jeweiligen Masse beim Überfahren entsprechende proportionale Messsignale erfasst/zugeordnet werden. Hierfür können auch Sensoren eingesetzt werden, die andere physikalische Messprinzipien nutzen. Damit kann die jeweilige Eigenmasse oder es können aber auch die Radlasten und/oder Achslasten eines Fahrzeugs bestimmt werden.

Üblicherweise werden diese Sensoren in Balkenform eingesetzt, so dass sie in eine Achsrichtung eine deutlich größere Länge aufweisen, als in die senkrecht dazu ausgerichtete Achsrichtung. Dadurch ist es möglich die gesamte Breite zumindest den größten Teil einer Fahrbahn oder eines Fahrstreifens abzudecken.

Mit beiden Arten von Sensoren (Sensoren zur Bestimmung der Masse und Induktivschleifen) ist auch eine Bestimmung des jeweiligen Fahrzeugtyps über eine Mustererkennung möglich.

So kann ein Sensor, der auch als "Wiegebalken" bezeichnet wird, mit einer Breite von ca. 5 cm bei der Überfahrt eines Rades einen elektrischen Impuls, dessen Ausdehnung ("Fläche") bei gegebener Geschwindigkeit proportional zur Masse ist, abgeben, der als Messsignal genutzt werden kann. Die Induktivschleifen liefern bei der Überfahrt ein charakteristisches Muster des Fahrzeug-Unterbodens, aus dem 8-16 Fahrzeugklassen ermittelt und die Fahrzeuglänge bestimmt werden kann. Die Geschwindigkeit kann sowohl aus dem zeitlichen Versatz der Muster der Induktivschleifen als auch dem Versatz der Impulse der Wiegebalken ermittelt werden. Über die Sensoren zur Bestimmung der Masse kann dann das jeweilige Radmuster (Achsabstände, Achsgruppen und deren Einzelgewichte) ermittelt werden.

Häufig werden Sensoren zur Bestimmung der Masse eingesetzt, die lediglich einen Teil der Breite einer Fahrbahn oder eines Fahrstreifens erfassen können. In der Regel werden dann Sensoren eingesetzt, die aus zwei Halbbalken gebildet sind. Damit ist es möglich die Räder eines Fahrzeugs einzeln zu erfassen. Zusätzlich dazu kann die Biegebeanspruchung der Sensoren vermindert werden.

Die Bestimmung der Masse oder von Radlasten ist in der Regel nur für den Schwerlastverkehr von Interesse (LKW mit und ohne Anhänger, Sattel-Kfz), da diese den größten Einfluss auf den Verschleiß der Straße haben.

Es werden auch Transponderschleifen eingesetzt, um Kalibrierfahrzeuge, die mit einem entsprechenden Transponder ausgestattet sind, im fließenden Verkehr zu erkennen. Dies ist aus WO 2009/109158 A1 bekannt.

Die bisher bekannten Erkennungs- und Erfassungssysteme sind insbesondere bei komplexeren Sensoranordnungen mit mehreren Sensoren/Induktivschleifen, die in Fahrtrichtung nacheinander angeordnet sind, nicht ohne Weiteres in der Lage eine Erfassung/Bestimmung auch in beiden möglichen Fahrtrichtungen zu ermöglichen. Insbesondere ist jeweils eine unterschiedliche Kalibrierung gesondert durchzuführen.

Die herkömmlichen Systeme weisen jedoch Probleme bei der Zuverlässigkeit, Sicherheit und in ihrer einfachen Handhabung und Montage sowie Flexibilität auf. So kann nicht oder nur mit sehr hohem Aufwand auf sich ändernde nationale gesetzliche oder andere Vorgaben, was die Erfassung und Auswertung betreffen kann, reagiert werden. Bisher ist es auch nachteilig, dass es Defizite bei der Erkennung und Berücksichtigung von Fehlern oder Defekten bzw. Messfehlern gibt. Auch die Flexibilität bei der Datenübertragung von und zu einem bekannten System oder einer bekannten Anordnung lässt zu wünschen übrig.

Es ist daher Aufgabe der Erfindung, Möglichkeiten vorzuschlagen mit denen die Erfassung von Kraftfahrzeugen und deren Massen auf Straßen im laufenden/fließenden Verkehr dauerhaft genauer, flexibler, sicherer, mit hoher Zeitauflösung erfolgen kann. Weiterhin soll flexibler auf sich verändernde Rahmenbedingungen reagiert werden können und der Aufbau der Anlagen soll einfacher, ökonomischer und zuverlässiger sein.

Erfindungsgemäß wird diese Aufgabe mit einer Sensoranordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Einrichtung zur Erfassung, Klassifikation und Verwiegung von Kraftfahrzeugen auf Straßen im fließenden Verkehr sind Sensoren zur Bestimmung der Masse von Fahrzeugen und Induktivschleifen für mindestens eine Fahrspur vorhanden und in/an einer Fahrspur angeordnet. Die Sensoren zur Bestimmung der Masse sind an einen Ladungsverstärker und über diesen an eine Einrichtung zur Erfassung und ersten Verarbeitung der von den Sensoren zur Bestimmung der Masse gelieferten/detektierten Signalen und die Induktivschleifen sind an eine Einrichtung zur Erfassung und Klassifikation von Fahrzeugen angeschlossen.

Außerdem kann ein Zustands-Überwachungssystem der gesamten Einrichtung vorhanden sein.

Die Einrichtung zur Erfassung und ersten Verarbeitung der von den Sensoren zur Bestimmung der Masse gelieferten/generierten Messsignale sollte eine interne elektronische Auswerteeinheit aufweisen, in der die von den Sensoren gelieferten Messsignale ausgewertet und die so ermittelten Daten an die Einheit zur Erfassung und Klassifikation übertragen werden können. Die Einrichtung zur Erfassung und Verarbeitung der von den Sensoren zur Bestimmung der Masse gelieferten Messsignale sollte ein geschlossenes System darstellen, das von außen bis auf Schnittstellen für eine Überführung der von den Sensoren gelieferten Messsignale in die Einrichtung zur Erfassung und Verarbeitung der von den Sensoren zur Bestimmung der Masse gelieferten Messsignale und die Übertragung der von der Einrichtung zur Erfassung und Verarbeitung der von den Sensoren zur Bestimmung der Masse gelieferten Messsignale ermittelten Daten in die Einrichtung zur Erfassung und Klassifikation sowie eine Zuführung für Elektroenergie unzugänglich ist. Die Übertragung von Daten aus der Einrichtung zur Erfassung und Verarbeitung der von den Sensoren zur Bestimmung der Masse gelieferten Messsignale in die Einrichtung zur Erfassung und Klassifikation sollte verschlüsselt erfolgen. Die Unzugänglichkeit der Einrichtung zur Erfassung und Verarbeitung der von den Sensoren zur Bestimmung der Masse gelieferten Messsignale kann beispielsweise über eine Plombierung gesichert sein, um insbesondere eine Eichung und deren Nachweis zu sichern.

Die Einrichtung zur Erfassung und Verarbeitung der von den Sensoren zur Bestimmung der Masse gelieferten Messsignale kann so ein autark arbeitendes System sein, in dem die Auswertung der von den Sensoren zur Bestimmung der Masse gelieferten Messsignale, getrennt von anderen Auswertungsaufgaben, die zumindest überwiegend in der Einrichtung zur Erfassung und Klassifikation erfolgen, durchgeführt werden, da wegen der hohen Messsignaldatenrate, die Auswertung der von den Sensoren zur Bestimmung der Masse gelieferten Messsignale, einen sehr hohen rechentechnischen Auswerteaufwand erforderlich macht. Dadurch, dass die Auswertung dieser Messsignale allein in der Einrichtung zur Erfassung und Verarbeitung der von den Sensoren zur Bestimmung der Masse gelieferten Messsignale und getrennt von anderen Auswerteaufgaben erfolgt, kann eine Berücksichtigung aller erfassten Messsignale mit großer Zeitauflösung erreicht werden.

Die Einrichtung zur Erfassung und Verarbeitung der von den Sensoren zur Bestimmung der Masse gelieferten Messsignale sollte auch von außen nicht zugänglich sein, um einen unerwünschten Fremdeingriff oder eine Manipulation zu vermeiden. Es sollten lediglich Zugänge oder Schnittstellen für eine bereits vorhandene oder noch zu beschreibende Datenübertragung aus bzw. in die Einrichtung zur Erfassung und Verarbeitung der von den Sensoren zur Bestimmung der Masse gelieferten Messsignale sowie für eine Versorgung mit elektrischer Energie vorhanden sein.

Die Einrichtung zur Erfassung und Verarbeitung der von den Sensoren zur Bestimmung der Masse gelieferten Messsignale sollte so ausgebildet sein, dass eine Detektion und nähere quantitative Bestimmung von Rädern oder Achsen von Fahrzeugen, beim Überfahren von Sensoren zur Bestimmung der Masse im Hinblick auf deren Amplituden, Integralen, der zeitlichen Ausdehnung, den jeweiligen Zeitpunkten, (permanente) Führung und/oder Auswertungen von Statistiken und/oder eine Prüfung und Erkennung von Messsignal- oder Sensorfehlern erreichbar ist. Außerdem kann mindestens eine Schnittstelle für eine Datenübertragung vorhanden sein.

Die Energieversorgung der Ladungsverstärker kann über die Einrichtung zur Erfassung und Verarbeitung der von den Sensoren zur Bestimmung der Masse gelieferten Messsignale erfolgen und somit gesteuert erfolgen können. Beim Auftreten von Fehlern oder Eingriffen kann abgeschaltet werden.

Vorteilhaft können mindestens 16, bevorzugt mindestens 32 Sensoren zur Bestimmung der Masse an die Einrichtung zur Erfassung und Verarbeitung der von den Sensoren zur Bestimmung der Masse gelieferten Messsignale angeschlossen werden. Dabei können 4 Ladungsverstärker mit jeweils 4 oder 8 Ein- und Ausgangskanälen eingesetzt werden. Die Ein- und Ausgänge der Einrichtung zur Erfassung und Verarbeitung der von den Sensoren zur Bestimmung der Masse gelieferten Messsignale und des/der verstärker(s) können anschlusskompatibel ausgebildet sein, so dass für die jeweiligen Verbindungen und den Anschluss der elektrischen Stromversorgung jeweils baugleiche Verbindungsleitungen und keine Sonderanfertigungen oder unterschiedlich konfigurierte Verbindungsleitungen erforderlich sind.

Die Einrichtung zur Erfassung und Klassifikation von Fahrzeugen kann eine Steuer- und Kommunikationseinheit und/oder eine Einheit, die spezifische Vorgaben für eine Erfassung und Klassifikation, insbesondere technische Lieferbedingungen für Streckenstationen, die für unterschiedliche Staaten spezifisch sein können, berücksichtigt, aufweisen.

Die Einrichtung zur Erfassung und Klassifikation von Fahrzeugen kann eine integrierte unterbrechungsfreie Versorgung für Elektroenergie (z.B. einen Akkumulator, insbesondere eine Lithium-Ionen-Batterie), mindestens eine Schnittstelle für einen Empfang und/oder eine Übertragung von Daten, eine erste Funktionsgruppe zur Erfassung von Überfahrzeiten, einer Fahrzeugklassifikation, zur Bestimmung der Geschwindigkeit und/oder der Länge von Fahrzeugen sowie zur Aggregation (Kumulation, fortlaufende Statistik-Bildung über wählbare Zeitintervalle, z.B. stundenweise) und Speicherung solcher Daten, eine zweite Funktionsgruppe, die zur dynamischen Bestimmung der sowie von Rad- und Achslasten von Fahrzeugen, die Sensoren zur Bestimmung der Masse überfahren, und zur Ableitung weiterer Parameter von Fahrzeugen aus Messsignalen, die von Sensoren zur Bestimmung der Masse geliefert worden sind, sowie zur Aggregation und Speicherung solchen Daten ausgebildet ist, und/oder eine dritte Funktionsgruppe zur Überwachung der gesamten Einrichtung aufweisen.

An der Einrichtung zur Erfassung und Klassifikation von Fahrzeugen und/oder dem Zustands-Überwachungssystem kann mindestens ein optisches Anzeigeelement (z.B. OLED-Farbdisplay) und es können mehrere Schnittstellen, die insbesondere ausgewählt sind aus einer RS485-Lokalbus-, einer RS232-Inselbus-, einer Ethernet-, einer PROFINET-Schnittstelle und einer Schnittstelle für eine drahtlose Datenübertragung, vorhanden sein.

So können mit einem Lokalbus vor Ort, also am Installationsort oder in dessen Nähe, eine oder mehrere Einheiten, die Funktionsgruppen realisiert sein und mit einem Steuermodul verbunden werden. Von dort kann eine Verbindung zu einer entfernt angeordneten Zentrale über einen Inselbus herstellt werden (Hierarchieprinzip).

Durch eine Herausführung einer so ausgebildeten Schnittstelle kann auch eine externe Erfassung und Auswertung von Messsignalen, z.B. mit nicht zu einer erfindungsgemäßen Einrichtung gehörenden Komponenten, die auch von verschiedenen, also auch Fremdherstellern kommen können, erreicht werden.

Mit einem Inselbus können mehrere erfindungsgemäße Einrichtungen mit einer Zentrale oder Knoten, die Unterzentralen darstellen können, verbunden werden.

Mit Schnittstellen, die für eine drahtlose Datenübertragung ausgebildet sind, können mobile Geräte (z.B. Smart Phone, tragbare Computer) für die Weiterübertragung oder Einflussnahme auf eine erfindungsgemäße Einrichtung genutzt werden.

Die Einrichtung zur Erfassung und Verarbeitung der von den Sensoren zur Bestimmung der Masse gelieferten Messsignale sollte so ausgebildet sein, dass eine Bestimmung der Geschwindigkeit, der Achslasten, der Gesamtmasse, der Achsabstände und/oder des Fahrzeugtyps von die Sensoren zur Bestimmung der Masse überfahrenden Fahrzeugen erreichbar ist. Sie sollte auch in der Lage sein, die Ausrichtung/Lage von Fahrzeugen in einer Fahrspur bzw. die Art der Bereifung eines Fahrzeugs bestimmen zu können. Dazu kann z.B. mindestens ein Sensor zur Bestimmung der Masse nicht senkrecht, sondern in einem schrägen Winkel, beispielsweise 20 ° zur eigentlichen Fahrtrichtung von Fahrzeugen ausgerichtet und in einer Fahrspur angeordnet sein, um die Ausrichtung oder Lage von Fahrzeugen in der jeweiligen Fahrspur einfach erfassen und dokumentieren zu können, so dass ein späterer Nachweis möglich ist.

Es kann auch eine Transponderschleife an die Einrichtung zur Erfassung und Klassifikation von Fahrzeugen angeschlossen sein, mit der beispielsweise eine Identifikation von Kalibrierfahrzeugen möglich ist. Die mit einer Transponderschleife erfassten Informationen/Daten können beispielsweise dabei drahtlos übertragen werden. Es können auch alternative Einrichtungen zur Identifizierung von Kalibrier- und Testfahrzeugen, z.B. mit drahtloser Übertragung eingesetzt werden.

Bei einer Zustands- und Funktionsüberwachung können insbesondere der sichere Verschluss der einzelnen Elemente der erfindungsgemäßen Einrichtung, z.B. Türen, eine Temperaturüberwachung und/oder eine Überwachung der elektrischen Spannung, die für die Versorgung der eingesetzten Verbraucher an den Elementen der erfindungsgemäßen Einrichtung anliegt, durchgeführt werden.

Insbesondere bei der Einrichtung zur Erfassung und Verarbeitung der von den Sensoren zur Bestimmung der Masse gelieferten Messsignalen kann eine Analog-Digital-Wandlung der mit den Sensoren zur Bestimmung der Masse erfassten und ggf. mit einem Ladungsverstärker verstärkten Messsignale für die Auswertung vorgenommen werden.

Dabei kann auch der Messsignalverlauf bei der Auswertung berücksichtigt werden, so dass nicht nur die Messsignalamplituden und die jeweiligen Zeiten berücksichtigt werden. Es kann bei Erkennung eines den jeweiligen Sensor zur Bestimmung der Masse überfahrenden Rades eines Fahrzeugs der gesamte oder ein wesentlicher Teil des Messsignalverlaufs bei der Auswertung berücksichtigt werden. Dies kann in einfacher Form eine Integration sein. Es besteht aber auch die Möglichkeit die Anstiege des Messsignals zusätzlich zu berücksichtigen. Beispielsweise beim Erkennen untypischer Messsignale bzw. Messsignalverläufe kann ein Fehler an einem Sensor oder einer Induktivschleife erkannt und bei der Auswertung berücksichtigt werden. Dabei kann ein erkannter Fehler/Defekt auch zu einer Generierung eines Warnsignals oder eine anderen dementsprechenden Information führen.

Bei der Erfindung besteht auch die vorteilhafte Möglichkeit, Messsignale, die mit den Sensoren zur Bestimmung der Masse und mit Induktionsschleifen erfasst worden sind, in bzw. mit den bereits erwähnten zwei unterschiedlichen Einrichtungen zu erfassen und auszuwerten. Die Messsignale und/oder die nach der Auswertung erhaltenen Ergebnisse können aber auch der jeweils anderen Einrichtung zugeführt und darin dann gemeinsam ausgewertet werden, wodurch die Erfassungsgenauigkeit fahrzeugspezifisch erhöht werden kann.

Die Einrichtung zur Erfassung und Verarbeitung der von den Sensoren zur Bestimmung der Masse gelieferten Messsignale und die Einrichtung zur Erfassung und Klassifikation von Fahrzeugen können über eine Leitung miteinander verbunden sein, über die eine zeitliche Synchronisation der Messsignale von Induktivschleifen und Sensoren mit der Einrichtung zur Erfassung und Verarbeitung der von den Sensoren zur Bestimmung der Masse gelieferten Messsignale erreicht werden kann. Diese Leitung oder eine andere Leitung kann auch zur Energieversorgung des/der Ladungsverstärker(s) von der Einrichtung zur Erfassung und Verarbeitung der von den Sensoren zur Bestimmung der Masse gelieferten Messsignale genutzt werden.

An der Einrichtung zur Erfassung und Verarbeitung der von den Sensoren zur Bestimmung der Masse gelieferten Messsignale kann/können eine optische Anzeige und/oder eine manuelle Eingabeeinheit vorhanden oder daran anschließbar sein. Dabei kann es sich um ein OLED-Farbgrafik-Display handeln, das auch als Touchscreen oder mit einer zusätzlichen Tastatur ausgebildet sein kann. Damit können bei der Installation, Inbetriebnahme zur Konfiguration des Gesamtsystems oder für Testzwecke manuell Eingaben erfolgen.

Vorteilhaft kann die Einrichtung zur Erfassung und Verarbeitung der von den Sensoren zur Bestimmung der Masse gelieferten Messsignale so ausgebildet sein, dass eine indirekte Überwachung der Funktion von Sensoren und die Einrichtung zur Erfassung und Klassifikation von Fahrzeugen so ausgebildet sein, dass eine Überwachung der Funktion von Induktivschleifen erreicht werden kann.

Die Einrichtung zur Erfassung und Klassifikation von Fahrzeugen und/oder die Induktivschleifen können in einem Abstand von mindestens 1 m bis maximal 300 m zur Einrichtung zur Erfassung und Verarbeitung der von den Sensoren zur Bestimmung der Masse gelieferten Messsignale und/oder den Sensoren angeordnet sein. Dadurch besteht die vorteilhafte Möglichkeit, die Länge von kostenintensiven Verbindungsleitungen zwischen den Sensoren, dem/den Ladungsverstärker(n) und der Einrichtung zur Erfassung und Verarbeitung der von den Sensoren zur Bestimmung der Masse gelieferten Messsignale zu minimieren und an die jeweiligen örtlichen Gegebenheiten anzupassen.

Mit der Erfindung kann ein kompakter, leistungsfähiger und zuverlässiger Aufbau zur Verfügung gestellt werden. Durch die Skalierbarkeit, was insbesondere die Anzahl der anschließbaren Sensoren und Induktivschleifen betrifft, ist eine flexible Anpassung an den jeweiligen Standort und die dort geltenden, insbesondere gesetzlichen Vorschriften möglich. So können beispielsweise die technischen Lieferbedingungen für Streckenstationen, herausgegeben von der Bundesanstalt für Straßenwesen (BASt) oder ähnliche Vorgaben aus anderen Staaten berücksichtigt werden.

Es ist eine Synchronisationsgenauigkeit der mit den Sensoren und den Induktivschleifen erfassten Messsignale von Bruchteilen einer Millisekunde erreichbar. Außerdem kann die Datenübertragung verschlüsselt erfolgen, was die Sicherheit erhöht.

Nachfolgend soll die Erfindung beispielhaft erläutert werden.

Dabei zeigt:

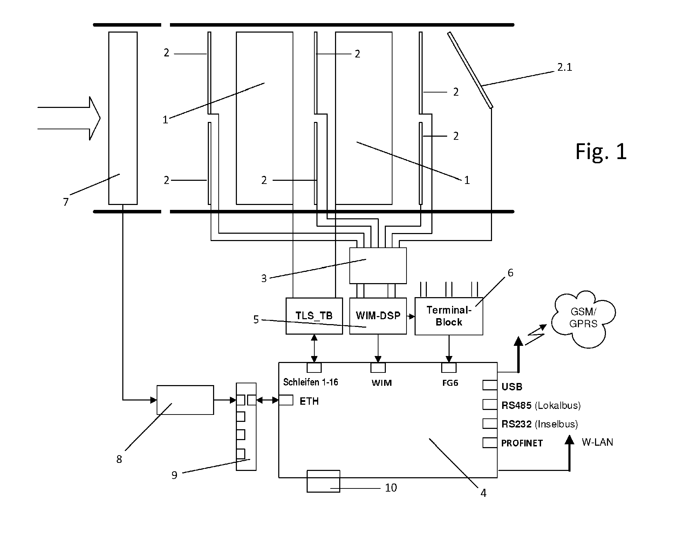

- Figur 1: in schematischer Darstellung den Aufbau eines Beispiels einer erfindungsgemäßen Einrichtung.

Die Figur 1 zeigt in schematischer Form ein Beispiel einer erfindungsgemäßen Einrichtung. Dabei sind in einer Fahrspur in Fahrtrichtung gesehen eine Transponderspule 7, jeweils drei Paare von Sensoren 2 zur Bestimmung der Masse und zwischen jeweils einem Paar der Sensoren 2 eine (Doppel-)-Induktivschleife 1 in der Fahrbahn eingelassen.

Die Sensoren 2 sind über Leitungen mit dem/den Ladungsverstärker(n) 3 und dieser ist mit der Einrichtung 5 zur Erfassung und Verarbeitung von mit den Sensoren 2 zur Bestimmung der Masse gelieferten Messsignale verbunden.

Die Induktivschleifen 1 sind an die Einrichtung 4 zur Erfassung und Klassifikation von Fahrzeugen angeschlossen.

Die von der Transponderschleife 7 erfassten Signale/Daten können mit einem RFID-Dekoder 8 bei diesem Beispiel über einen Netzwerkverteiler (Hub, Switch) Schalter 9 an die Einrichtung 4 übertragen werden.

An der Einrichtung 4 sind bei diesem Beispiel mehrere Schnittstellen USB, RS 485, RS232, Profinet, W-LAN vorhanden sowie eine elektronische Speicherkarte 10 anschließbar, über die eine geänderte Programmierung oder eine angepasste Auswertesoftware für ge- bzw. veränderte Vorgaben bei der Auswertung zur Verfügung gestellt werden kann und die zur Speicherung der ermittelten Fahrzeugdaten dienen kann. Eine Datenübertragung kann auch mittels GSM/GPRS/UMTS erfolgen.

Desweiteren sind die Einrichtungen 4 und 5 für einen Datenaustausch direkt miteinander verbunden.

In der Figur 1 ist außerdem ein zusätzlicher Sensor 2.1 zur Bestimmung der Masse, der nicht senkrecht, sondern in einem schrägen Winkel, hier 20° zur eigentlichen Fahrtrichtung von Fahrzeugen ausgerichtet und in einer Fahrspur angeordnet ist, Damit ist die Erfassung der Ausrichtung oder Lage von Fahrzeugen in der jeweiligen Fahrspur einfach möglich.

## Patentansprüche

1. Einrichtung zur Erfassung, Klassifikation und Verwiegung von Kraftfahrzeugen auf Straßen im fließenden Verkehr, bei der Sensoren zur Bestimmung der Masse von Fahrzeugen und Induktivschleifen für mindestens eine Fahrspur vorhanden und in einer Fahrspur Induktivschleifen (1) und Sensoren (2) zur Bestimmung der Masse angeordnet sind, wobei
die Sensoren (2) zur Bestimmung der Masse an einen Ladungsverstärker (3) und über diesen an eine Einrichtung (5) zur Erfassung und Verarbeitung, der von den Sensoren (2) zur Bestimmung der Masse gelieferten Signale und
die Induktivschleifen (1) an eine Einrichtung (4) zur Erfassung und Klassifikation von Fahrzeugen angeschlossen sind.

2. Einrichtung nach Anspruch 1, **dadurch gekennzeichnet, dass** ein Zustands-Überwachungssystem (6) der gesamten Einrichtung vorhanden ist.

3. Einrichtung nach Anspruch 1 oder 2, **dadurch gekennzeichnet, dass** die Einrichtung (5) zur Erfassung und Verarbeitung der von den Sensoren (2) zur Bestimmung der Masse gelieferten Messsignale eine interne elektronische Auswerteeinheit aufweist, in der die von Sensoren (2) gelieferten Messsignale ausgewertet und die ermittelten Daten an die Einheit (4) zur Erfassung und Klassifikation übertragbar sind, wobei die Einrichtung (5) ein geschlossenes System darstellt, das von außen bis auf Schnittstellen für eine Überführung der von den Sensoren (2) gelieferten Messsignale in die Einrichtung (5) und die Übertragung der ermittelten Daten von der Einrichtung (5) zur Erfassung und Verarbeitung der von den Sensoren (2) zur Bestimmung der Masse gelieferten Messsignale in die Einrichtung (4) zur Erfassung und Klassifikation sowie eine Zuführung für Elektroenergie unzugänglich ist.

4. Einrichtung nach einem der vorhergehenden Ansprüche, **dadurch gekennzeichnet, dass** mit der Einrichtung (5) zur Erfassung und Verarbeitung der von den Sensoren (2) zur Bestimmung der Masse gelieferten Messsignale
eine Detektion und nähere Bestimmung von Rädern oder Achsen von Fahrzeugen, beim Überfahren von Sensoren (2) zur Bestimmung der Masse in Bezug zu deren Amplituden, Integralen, zeitlichen Ausdehnungen und den jeweiligen Zeitpunkten, Auswertungen von Statistiken und/oder
eine Prüfung und Erkennung von Messsignal- oder Sensorfehlern erreichbar ist.

5. Einrichtung nach einem der vorhergehenden Ansprüche, **dadurch gekennzeichnet, dass** an der Einrichtung (5) zur Erfassung und Verarbeitung der von den Sensoren (2) zur Bestimmung der Masse gelieferten Messsignale mindestens eine Schnittstelle für eine verschlüsselte Datenübertragung zur Einrichtung (4) zur Erfassung und Klassifikation von Fahrzeugen vorhanden ist.

6. Einrichtung nach einem der vorhergehenden Ansprüche, **dadurch gekennzeichnet, dass** mindestens 8, bevorzugt mindestens 16 und besonders bevorzugt 32 Sensoren (2) zur Bestimmung der Masse an die Einrichtung (5) zur Erfassung und Verarbeitung der von den Sensoren (2) zur Bestimmung der Masse gelieferten Messsignale anschließbar sind.

7. Einrichtung nach einem der vorhergehenden Ansprüche, **dadurch gekennzeichnet, dass** die Einrichtung (4) zur Erfassung und Klassifikation von Fahrzeugen eine Steuer- und Kommunikationseinheit und/oder eine Einheit, die spezifische Vorgaben für eine Erfassung und Klassifikation, insbesondere technische Lieferbedingungen für Streckenstationen, berücksichtigt, aufweist.

8. Einrichtung nach einem der vorhergehenden Ansprüche, **dadurch gekennzeichnet, dass** die Einrichtung (4) zur Erfassung und Klassifikation von Fahrzeugen eine integrierte unterbrechungsfreie Versorgung für Elektroenergie;
mindestens eine Schnittstelle für einen Empfang und/oder eine Übertragung von Daten;
eine erste Funktionsgruppe zur Erfassung von Überfahrzeiten, einer Fahrzeugklassifikation, zur Bestimmung der Geschwindigkeit und/oder der Länge von Fahrzeugen, zur Aggregation und Speicherung der Fahrzeugdaten oder zur Lage/Ausrichtung eines Fahrzeugs in der Fahrspur oder der Art der Bereifung eines Fahrzeugs;
eine zweite Funktionsgruppe, die zur dynamischen Bestimmung der Masse von Fahrzeugen und/oder von Rad- und Achslasten, die Sensoren (2) zur Bestimmung der Masse überfahren und zur Ableitung weiterer Parameter von Fahrzeugen aus den Messsignalen, die von Sensoren (2) zur Bestimmung der Masse geliefert worden sind, sowie zur Aggregation und Speicherung solcher Fahrzeugdaten, ausgebildet ist; und/oder
eine dritte Funktionsgruppe zur Überwachung der gesamten Einrichtung
aufweist.

9. Einrichtung nach einem der vorhergehenden Ansprüche, **dadurch gekennzeichnet, dass** an der Einrichtung (4) zur Erfassung und Klassifikation von Fahrzeugen und/oder dem Zustands-Überwachungssystem (6) mindestens ein optisches Anzeigeelement und mehrere Schnittstellen, die ausgewählt sind aus RS485-Lokalbus-, RS232-Inselbus-, Ethernet-, PROFINET-Schnittstelle und Schnittstelle für eine drahtlose Datenübertragung, vorhanden sind.

10. Einrichtung nach einem der vorhergehenden Ansprüche, **dadurch gekennzeichnet, dass** eine Transponderschleife (7) an die Einrichtung (4) zur Erfassung und Klassifikation von Fahrzeugen angeschlossen ist.

11. Einrichtung nach einem der vorhergehenden Ansprüche, **dadurch gekennzeichnet, dass** die Energieversorgung der Ladungsverstärker (3) über die Einrichtung (5) zur Erfassung und Verarbeitung der von den Sensoren (2) zur Bestimmung der Masse gelieferten Messsignale erfolgt und somit steuerbar ist und beim Auftreten von Fehlern oder Eingriffen abschaltbar ist.

12. Einrichtung nach einem der vorhergehenden Ansprüche, **dadurch gekennzeichnet, dass** die Einrichtung (5) zur Erfassung und Verarbeitung der von den Sensoren (2) zur Bestimmung der Masse gelieferten Messsignale und die Einrichtung (4) zur Erfassung und Klassifikation von Fahrzeugen über eine Leitung miteinander verbunden sind, über die eine zeitliche Synchronisation der Messsignale von Induktivschleifen (1) und Sensoren (2) mit der Einrichtung (5) zur Erfassung und Verarbeitung der von den Sensoren (2) zur Bestimmung der Masse gelieferten Messsignale erreichbar ist.

13. Einrichtung nach einem der vorhergehenden Ansprüche, **dadurch gekennzeichnet, dass** an der Einrichtung (5) zur Erfassung und Verarbeitung der von den Sensoren (2) zur Bestimmung der Masse gelieferten Messsignale eine optische Anzeige und/oder eine manuelle Eingabeeinheit vorhanden oder daran anschließbar ist.

14. Einrichtung nach einem der vorhergehenden Ansprüche, **dadurch gekennzeichnet, dass** die Einrichtung (5) zur Erfassung und Verarbeitung der von den Sensoren (2) zur Bestimmung der Masse gelieferten Messsignale so ausgebildet ist, dass eine indirekte Überwachung der Funktion von Sensoren (2) und die Einrichtung (4) zur Erfassung und Klassifikation von Fahrzeugen so ausgebildet ist, dass eine Überwachung der Funktion von Induktivschleifen (1) erreichbar ist.

15. Einrichtung nach einem der vorhergehenden Ansprüche, **dadurch gekennzeichnet, dass** die Einrichtung (4) zur Erfassung und Klassifikation von Fahrzeugen und/oder die Induktivschleifen (1) in einem Abstand von mindestens 1 m bis maximal 300 m zur Einrichtung (5) zur Erfassung und Verarbeitung der von den Sensoren (2) zur Bestimmung der Masse gelieferten Messsignale und/oder den Sensoren (2) angeordnet sind, so dass die Länge von Verbindungsleitungen zwischen den Sensoren (2), dem/den Ladungsverstärker(n) (3) und der Einrichtung (5) zur Erfassung und Verarbeitung der von den Sensoren (2) zur Bestimmung der Masse gelieferten Messsignale minimierbar ist.
